# EUROPEAN PATENT SPECIFICATION

(11) **EP 1 810 882 B1**
(45) Date of publication and mention of the grant of the patent: **26.11.2008**
(21) Application number: 05788270.6
(22) Date of filing: 30.09.2005
(51) Int. Cl.: H04N 7/18, B60R 1/00, G03B 15/00, B62D 15/00

(54) **DEVICE FOR MONITORING A SPACE AROUND A MOBILE BODY**
VORRICHTUNG ZUR ÜBERWACHUNG EINES RAUMS UM EINEN BEWEGLICHEN KÖRPER HERUM
DISPOSITIF POUR SURVEILLER UN ESPACE AUTOUR D'UN CORPS MOBILE

(30) Priority: 28.10.2004 JP 2004313425
(43) Date of publication of application: 25.07.2007
(73) Proprietor: AISIN SEIKI KABUSHIKI KAISHA, Kariya-shi, Aichi-ken 448-8650 (JP)
(72) Inventor: KAKINAMI, Toshiaki, c/o AISIN SEIKI K. K., Kariya-shi, Aichi 4488650 (JP)
(74) Representative: Kramer - Barske - Schmidtchen
(86) International application number: PCT/JP2005/018130
(87) International publication number: WO 2006/046382

(56) References cited:
- EP-A- 1 308 346
- EP-A- 1 403 137
- EP-A- 1 403 139
- EP-A- 1 405 776
- JP-A- 5 238 311
- JP-A- 2001 076 298
- JP-A- 2003 019 937
- JP-A- 2003 146 133
- JP-A- 2003 511 288
- JP-A- 2004 114 976
- JP-A- 2004 120 661
- JP-A- 2004 161 215
- JP-A- 2004 173 048
- JP-A- 2004 268 860

## Description

### TECHNICAL FIELD

The present invention relates to a movable body circumstance monitoring apparatus for monitoring an environment around a movable body and displaying an image of a view at a desired position in the movable body, and relates to the movable body circumstance monitoring apparatus preferable for an apparatus for monitoring an environment around a vehicle and displaying appropriately a substance to act as an obstacle when parking the vehicle, for example.

### BACKGROUND ART

Heretofore, in order to minimize a blind corner behind a vehicle, various types of the apparatus having a camera mounted behind the vehicle to display its image on a monitor disposed in a driver's seat, have been disclosed, and already distributed in the markets. For example, there is proposed in a Patent document 1 as identified hereinafter, a movable body circumstance monitoring apparatus aimed for preventing an unexpected substance from appearing in a view as viewed from a desired position in the movable body by use of detection means for detecting environment information such as a size or a position of the substance around the movable body, and surely displaying the substance to act as an obstacle.

According to the above movable body circumstance monitoring apparatus, as illustrated in FIG.1 of the Patent document 1, it is provided with environment information detection means (SR1) and (SR2) for detecting and storing environmental information, such as the size and position of the substance around the movable body, and movable body information detection means (MB) for successively detecting and storing a position and posture of the movable body, to combine those detected information by information combining means (CB1) and (CB2), and correct a relationship of the position and posture of the movable body relative to the environment surrounding the movable body, to output the information, and create first and second specific views out of the environmental information around the position in the movable body by means of specific view creating means (SV1) and (SV2), and display it on an image by display means (VD). In addition, it is constituted to adjust at least a portion of the image in the second specific view, which is not overlapped on the image of the first specific view, to be displayed over the image of the first display means.

Also, in the Patent document 2, there is proposed a movable body circumstance monitoring apparatus aimed for surely detecting an obstacle most closely approaching to a movable body on an expected moving track of the movable body in the environment surrounding the movable body, without requiring a specific obstacle detection sensor, separately. That is, as illustrated in FIG.1 of the Patent document 2, it is provided with environment information detection means (SR) for detecting and storing environmental information, such as the size and position of the substance around the movable body, and track estimation means (TR) for estimating an expected moving track of the movable body. And, it is so constituted that the expected moving track is combined with the environmental information by point-blank moving distance measuring means (MC), to identify the obstacle present on the expected moving track, and measure a minimal distance between the movable body and the obstacle on the expected moving track. Furthermore, it is so constituted to notify the relationship between the movable body and the obstacle by notifying means (DP), on the basis of the result measured by the point-blank moving distance measuring means.

Patent document 1:
   Japanese Patent Laid-open Publication No.2004-114976
Patent document 2:
   Japanese Patent Laid-open Publication No.2004-120661

EP 1 403 139 A1 discloses a movable body circumstance monitoring apparatus. The movable body circumstance monitoring apparatus includes an environment information detecting means for detecting information about an environment surrounding the movable body, a movable body information detecting means for detecting position and posture of the movable body, an information combining means for combining the information of the movable body and the information of the environment around the movable body and a specific view creating means for creating a specific view of the movable body with reference to an information of an environment surrounding the movable body at a specific position based upon the information output from the information combining means. A display means displays the specific view created by the specific view creating means as an image.

JP 2004 4173048 discloses an onboard camera system which picks up images around the vehicle by several cameras installed on the vehicle. The picked-up camera pictures are displayed on a display device installed in the vehicle. The camera system is provided with picture recognition parts for detecting whether an obstacle is imaged in the camera pictures of the cameras or not and a display control part for selectively displaying a camera picture having the obstacle imaged therein out of the camera pictures of cameras on the display device, when it is detected by the picture recognition parts that the obstacle is imaged.

### DISCLOSURE OF THE INVENTION

### PROBLEMS TO BE SOLVED BY THE INVENTION

According to the movable body circumstance monitoring apparatus described in the Patent document 1 as cited above, it can prevent the unexpected substance from appearing in the view as viewed from the desired position in the movable body, and surely display the substance to act as an obstacle. Also, according to the movable body circumstance monitoring apparatus described in the Patent document 2, it can detect the obstacle by an image, for example, to determine which portion of the movable body will contact which portion of the obstacle, so that the point-blank moving distance on the expected moving track of the movable body can be measured appropriately.

However, since the specific view creating means in the Patent document 1 is so constituted to display a virtual image, and also in the Patent document 2, it is based on the display by the virtual image, an expense for processing the image shall be required, while the environmental information can be detected easily and surely by means of the aforementioned single image capturing means, for example.

On the other hand, the image capturing means is getting lower in price, with a digital camera or the like being popular, recently. Therefore, even if a plurality of image capturing means was employed, it might not necessarily result in increasing the price so much. Consequently, a motor vehicle having a plurality of cameras has been on the markets, recently. As changing operation of camera images has to be made by a vehicle driver, however, in order to select the image displaying the substance to act as the obstacle, it will be required to display all the images at first, which shall be extremely difficult to be pursued when the driver is driving the vehicle. For example, in the case where the vehicle is to be placed at a predetermined position, with the vehicle being moved backward, it is required to stop the vehicle every time when the camera image is to be checked, so as to change-over the switching operation, which will result in being more complicated.

Therefore, according to the present invention, in a movable body circumstance monitoring apparatus capable of selecting any one of image information output from a plurality of image capturing means, and displaying it, it is an object of the present invention to provide an inexpensive movable body circumstance monitoring apparatus, which is capable of automatically selecting an appropriate image including an obstacle which may bar to a movement of the movable body, to display it.

### MEANS FOR SOLVING THE PROBLEMS

In accomplishing the above-described object, in a movable body circumstance monitoring apparatus having a plurality of image capturing means mounted on different positions of a movable body for capturing an image of environment of said movable body to output an image information, and display means for selecting one of the image information output from said plurality of image capturing means to be displayed, the present invention is constituted by comprising the features of claim 1. The above-described environmental information includes a size, position or the like of a substance around the movable body, and the movable body includes a vehicle, and a movable robot or the like.

In the movable body circumstance monitoring apparatus as described above, when said obstacle is included in both of the image information output from said specific image capturing means and the image information output from said second image capturing means, said display control means may be so constituted to select the image information output from the image capturing means, which outputs the image information captured at a position where said obstacle is away from a boundary of a view from said movable body.

Or, when a plurality of obstacles exist, and different obstacles thereof are included in both of the image information output from said specific image capturing means and the image information output from said second image capturing means, said display control means may be so constituted to select the image information output from the image capturing means, which outputs the image information including the obstacle with highest possibility of approaching to said movable body.

In the movable body circumstance monitoring apparatus as described above, said obstacle detection means may comprise track estimation means for estimating an expected moving track of said movable body on the basis of the information output from said information combining means, and point-blank moving distance measuring means for combining the expected moving track estimated by said track estimation means with the environmental information detected by said environmental information detection means, to identify said obstacle present on the expected moving track of said movable body, and measuring a minimal distance between said movable body and said obstacle on the expected moving track. And, said display control means may be so constituted to select the image information output from the image capturing means, which outputs the image information including the obstacle with highest possibility of approaching to said movable body, on the basis of the result measured by said point-blank moving distance measuring means.

In the movable body circumstance monitoring apparatus as described above, said plurality of image capturing means may include image capturing means disposed in a moving direction of said movable body and a reverse direction thereof, respectively, and said display control means may be so constituted to select the image capturing means disposed in a longitudinal direction of said movable body, to be served as said specific image capturing means. Said specific image capturing means may comprise the image capturing means disposed in the moving direction of said movable body, and said second image capturing means may comprise the image capturing means disposed in a lateral direction of said movable body.

Accordingly, if the image capturing means are disposed at the front, rear, right and left of the vehicle, for example, the image capturing means disposed at a side of its moving direction are set to be the specific image capturing means. That is, when the vehicle moves forward, the image capturing means disposed at the front side of the vehicle is set to be the specific image capturing means, whereas, when the vehicle moves backward, the image capturing means disposed at the rear side of the vehicle is set to be the specific image capturing means, and the image capturing means disposed at the right and left sides are set to be the second image capturing means. Further, said plurality of image capturing means may comprise image capturing means disposed at four corners of said movable body.

Furthermore, when said movable body is moved from a first state to a second state, at least two images are captured by said specific image capturing means in said first state and said second state, and said environmental information detection means may include feature point tracking means for detecting a coordinate of a feature point on the image captured in said first state, and detecting a coordinate corresponding to said feature point on the image captured in said second state, on the basis of said two images. Also, said environmental information detection means may include three-dimensional coordinate estimation means for estimating a three-dimensional coordinate of said feature point on the basis of the position and posture of said vehicle in said first state and said second state, the coordinate of the feature point on the image captured in said first state, and the coordinate corresponding to said feature point on the image captured in said second state. And, when there exists an obstacle moving relatively according to movement of said movable body, it may be so constituted that the image in an image capturing region by said specific image capturing means is automatically changed into the image in an image capturing region by said second image capturing means.

### EFFECTS OF THE INVENTION

As the present invention is constituted as described above, the following effects will be achieved. That is, according to the movable body circumstance monitoring apparatus as described above, the appropriate image including the obstacles which may bar to the movement of the movable body can be automatically selected to be displayed. Therefore, in the case where a vehicle is moved backward to be stopped or parked at a predetermined position, since the obstacle is automatically displayed on the image, the driver can continue the reverse movement of the vehicle watching the obstacle, without any necessity for manually changing display of the image, to stop or park the vehicle appropriately.

Furthermore, since the obstacle which might contact the vehicle is certainly displayed on the image, without being influenced by the number or position of the obstacles, the vehicle can be stopped or parked appropriately.

### BRIEF DESCRIPTION OF THE DRAWINGS

FIG.1 is a block diagram showing main components of a movable body circumstance monitoring apparatus according to an embodiment of the present invention.
FiG.2 is a plan view of an example of an image capturing region in a vehicle with a movable body circumstance monitoring apparatus mounted thereon according to an embodiment of the present invention.
FiG.3 is a plan view of an example of the relationship between the image capturing region and an obstacle existing therein, when the vehicle as shown in FIG.2 is moved backward.

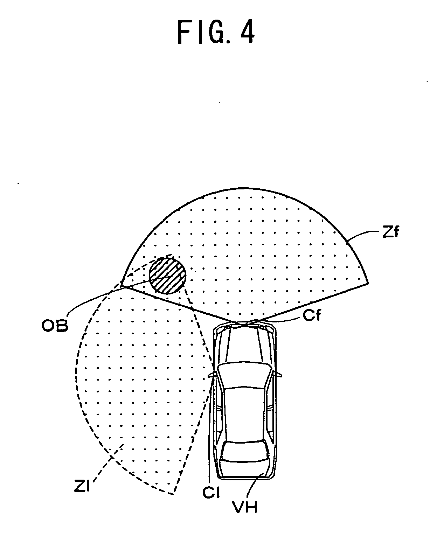

FIG.4 is a plan view of another example of the relationship between the image capturing region and an obstacle existing therein, when the vehicle as shown in FIG.2 is moved backward.
FIG.5 is a plan view of a further example of the relationship between the image capturing region and an obstacle existing therein, when the vehicle as shown in FIG.2 is moved backward.
FiG.6 is a plan view of another example of an image capturing region in a vehicle with a movable body circumstance monitoring apparatus mounted thereon according to an embodiment of the present invention.

### DESCRIPTION OF CHARACTERS

C1,C2: image capturing means
MB: movable body information detection means
SR: environmental information detection means
CB: information combining means
OD: obstacle detection means
VC: display control means
VD: display means
VH: vehicle

### BEST MODE FOR CARRYING OUT THE INVENTION

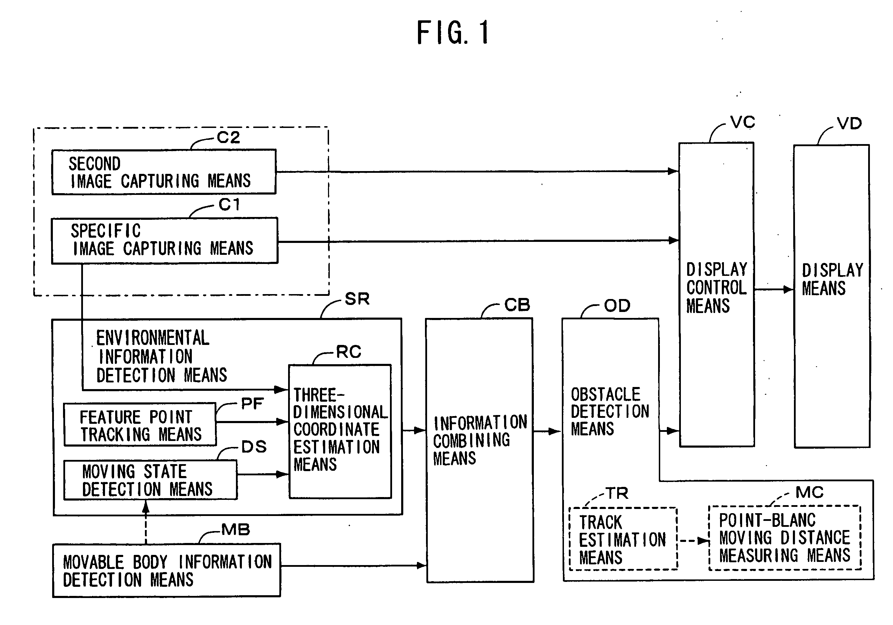

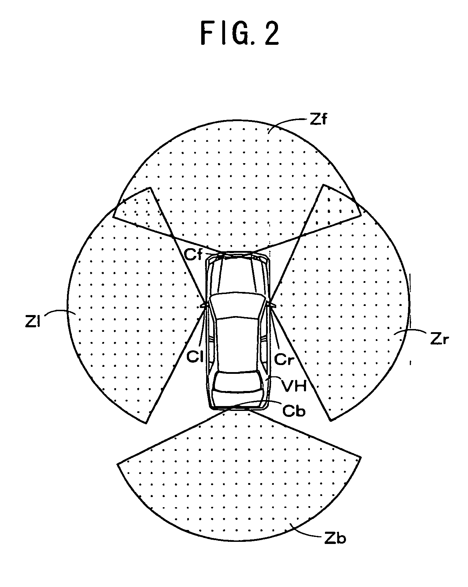

Hereinafter, will be explained a desirable embodiment of a movable body circumstance monitoring apparatus of the present invention. In FIG.1, there is shown an overall structure of an embodiment of the present invention. A movable body circumstance monitoring apparatus of the present embodiment is provided with a plurality of image capturing means (specific image capturing means Cl and second image capturing means C2), which are mounted on different positions of a movable body (not shown) such as a vehicle, for example, and which captures an image of environment of the movable body to output an image information, and display means (VD) for selecting one of the image information output from these image capturing means to be displayed. As for the image capturing means, there are cameras (Cf and the like in FIG.2) mounted on the vehicle (VH in FIG.2). In the case where the image capturing means are disposed at the front and rear, and also the right and left of the vehicle, for example, the image capturing means disposed at a side of its moving direction are set to be the specific image capturing means (C1). That is, when the vehicle moves forward, the image capturing means disposed at the front side of the vehicle is set to be the specific image capturing means (C1), whereas, when the vehicle moves backward, the image capturing means disposed at the rear side of the vehicle is set to be the specific image capturing means (C1), and the image capturing means disposed at the right and left sides are set to be the second image capturing means (C2).

Furthermore, there are provided environmental information detection means (SR) for detecting and storing environmental information around the movable body on the basis of the image information output from the specific image capturing means (C1), movable body information detection means (MB) for successively detecting and storing a position and posture of the movable body, and information combining means (CB) for combining the information detected by the movable body information detection means (MB) and the information detected by the environmental information detection means (SR), and correcting a relationship of the position and posture of the movable body relative to the environment to output the information. If the movable body corresponds to the vehicle, the movable body information detection means (MB) may be constituted by sensors (not shown) for detecting a vehicle motion, such as vehicle speed, steering state, turning state or the like.

Also, the environmental information detection means (SR) is provided with feature point tracking means (PF), wherein when the movable body is moved from a first state to a second state, at least two images are captured by the specific image capturing means (C1) in the first state and the second state, a coordinate of a feature point on the image captured in the first state is detected, and a coordinate corresponding to the feature point on the image captured in the second state is detected, on the basis of the two images, and moving state detection means (DS) for detecting the position and posture of the movable body in the first state and second state. And, it is provided with three-dimensional coordinate estimation means (RC) for estimating a three-dimensional coordinate of the feature point on the basis of the position and posture of the vehicle in the first state and the second state detected by the moving state detection means (DS), the coordinate of the feature point on the image captured in the first state, and the coordinate corresponding to the feature point on the image captured in the second state. If the movable body corresponds to the vehicle, the moving state detection means (DS) may be constituted by sensors (not shown) for detecting the vehicle motion, such as vehicle speed, steering state, turning state or the like, whereas the information detected by the movable body information detection means (MB) may be used. As the moving state detection means (DS), feature point tracking means (PF), three-dimensional coordinate estimation means (RC), information combining means (CB) and display means (VD) are basically the same as each means as described in the aforementioned Patent document 1, except for the elements relating to the virtual image display process, the detailed explanation of them will be omitted herein.

According to the present embodiment, there are provided obstacle detection means (OD) for detecting an obstacle to bar against movement of the movable body (hereinafter, simply referred to as obstacle), and display control means (VC). This display control means (VC) is provided for determining a positional relationship between the movable body and the obstacle, on the basis of the information detected by the obstacle detection means (OD) and the information output from the information combining means (CB), and selecting the image information output from one of the specific image capturing means (C1) and second image capturing means (C2) out of the plurality of image capturing means, to be displayed by the display means (VD). Accordingly, in the display means (VD), the image information output from one of the specific image capturing means (C1) and second image capturing means (C2), including the above obstacle, is displayed.

For example, in the case where the obstacle is included in both of the image information output from the specific image capturing means (C1) and the image information output from the second image capturing means (C2), the image information output from the image capturing means, which outputs the image information captured at a position where the obstacle is away from a boundary of a view from the movable body, is selected. Or, in the case where a plurality of obstacles exist, and different obstacles thereof are included in both of the image information output from the specific image capturing means (C1) and the image information output from the second image capturing means (C2), the image information output from the image capturing means, which outputs the image information including the obstacle with highest possibility of approaching to the movable body, is selected. Therefore, in the obstacle detection means (OD) of the present embodiment, there are provided track estimation means (TR) and point-blank moving distance measuring means (MC), as indicated by broken lines in FIG.1. The track estimation means (TR) is provided for estimating an expected moving track of the movable body on the basis of the information output from the information combining means (CB), and the point-blank moving distance measuring means (MC) is provided for combining the expected moving track estimated by the track estimation means (TR) with the environmental information detected by the environmental information detection means (SR), to identify the obstacle present on the expected moving track of the movable body, and measuring a minimal distance between the movable body and the obstacle on the expected moving track. And, the display control means (VC) is constituted to select the image information output from the image capturing means, which outputs the image information including the obstacle with highest possibility of approaching to the movable body, on the basis of the result measured by the point-blank moving distance measuring means (MC). As the track estimation means (TR) and point-blank moving distance measuring means(MC) are basically the same as each means as described in the aforementioned Patent document 2, except for the elements relating to the virtual image display process, the detailed explanation of them will be omitted herein.

FIG.2 illustrates an example of image capturing region for the vehicle (VH). As for the plurality of image capturing means, there are provided cameras (Cf) and (Cb), which are disposed at forward and backward portions (e.g., at upper portions of bumpers) of the vehicle (VH), and cameras (Cl) and (Cr), which are disposed at left and right portions (e.g., at end portions of door mirrors) of the vehicle (VH), whereby four image capturing regions (Zf), (Zb), (Zl), (Zr) are formed. Each of those cameras has a lens with 110-160 degree as an angle of horizontal view, and arranged at predetermined position and height, with its optical axis being directed to a predetermined direction. With respect to a monitor (not shown) served as the display means (VD) and an electric control device or the like for controlling it, they are the same as the devices provided for the parking guide system as disclosed in the Patent documents 1 and 2.

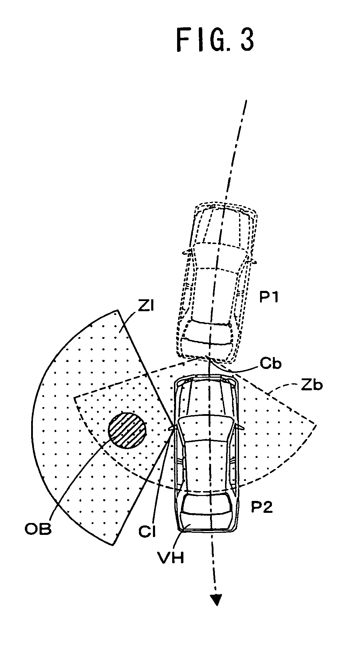

Accordingly, when the vehicle (VH) is moved along a track as indicated by a one-dot chain line in FIG.3, at the outset, backward in a direction of an arrow, the camera (Cb) disposed at the backward portion of the vehicle (VH) is served as the specific image capturing means (C1 in FIG.1), and the cameras (Cl) and (Cr) disposed at the left and right portions of the vehicle (VH) are served as the second image capturing means (C2 in FIG.1). In this respect, when the vehicle (VH) stays at a position (P1) as indicated by a broken line in FIG.3, the obstacle (OB) is present within the image capturing region (Zb) of the camera (Cb) disposed at the backward portion of the vehicle (VH), whereby the backward image of the vehicle (VH) by the camera (Cb), i.e., specific image capturing means (C1), will be displayed automatically on the monitor (not shown) served as the display means (VD). If the vehicle (VH) is moved backward further, to reach a position (P2) as indicated by a solid line in FIG.3, the obstacle (OB) will be out of the image capturing region (Zb), instead, the obstacle (OB) will be included in the image capturing region (Zl) of the camera (Cl), i.e., second image capturing means (C2), disposed at the left side of the vehicle (VH). As a result, the left image of the vehicle (VH) by the camera (C1), i.e., second image capturing means (C2) will be displayed automatically on the monitor (not shown) served as the display means (VD).

In this respect, when the obstacle (OB) is included in both of the images output from the neighboring cameras, selected is the camera, which is away from the boundary of the camera view, i.e., whose view is enough for covering the obstacle. For example, when the obstacle (OB) is included in both of the view of the camera (Cl) disposed at the left side of the vehicle (VH), i.e., the image capturing region (Zl), and the view of the camera (Cf) disposed at the forward portion of the vehicle (VH), i.e., the image capturing region (Zf), there is more room remained in the image capturing region (Zf), than the image capturing region (Zl), so that the image output from the camera (Cf) can be viewed more easily, and therefore, selected is the image output from the camera (Cf), which is placed at a position where the obstacle (OB) is away from the boundary of camera view, i.e., the image capturing region (Zf).

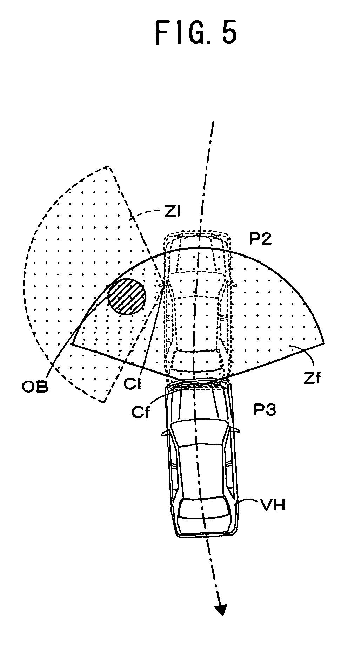

And, when the vehicle (VH) is moved backward further, from a position (P2) as indicated by a broken line in FIG.5, to reach a position (P3) as indicated by a solid line in FIG.5, the obstacle (OB) will be out of the image capturing region (Zl), instead, the obstacle (OB) will be included in the image capturing region (Zf) of the camera (Cf) disposed at the forward portion of the vehicle (VH). In this case, the camera (Cl) disposed at the left side of the vehicle (VH) is served as the specific image capturing means (C1 in FIG.1), and the image at the forward of the vehicle (VH) will be displayed automatically on the monitor (not shown) served as the display means (VD). Thus, with the obstacle (OB), which is relatively moved in accordance with the backward movement of the vehicle (VH), being moved from the image capturing region (Zb), to the image capturing region (Zl), then to the image capturing region (Zf), successively, the monitor (not shown) will be automatically changed to display the backward image of the vehicle (VH), then the left image of the vehicle (VH), and the forward image of the vehicle (VH), successively. Consequently, the driver can continue the reverse movement of the vehicle watching the obstacle (OB), without any necessity for manually changing the display of the image, to stop or park the vehicle appropriately.

Or, when there exist a plurality of obstacles, and different obstacles are included in both of the images output from the neighboring cameras, e.g., the different obstacles are included in both of the images captured by the cameras (Cl) and (Cb), selected is the camera served as the image capturing means, which outputs the image information including the obstacle with highest possibility of approaching to the vehicle (VH). For example, if track estimation means (TR) and point-blank moving distance measuring means (MC) are constituted, as indicated by the broken lines in FIG.1, selected is the camera, which outputs the image information including the obstacle with highest possibility of approaching to the vehicle (VH), on the basis of the result measured by the point-blank moving distance measuring means (MC).

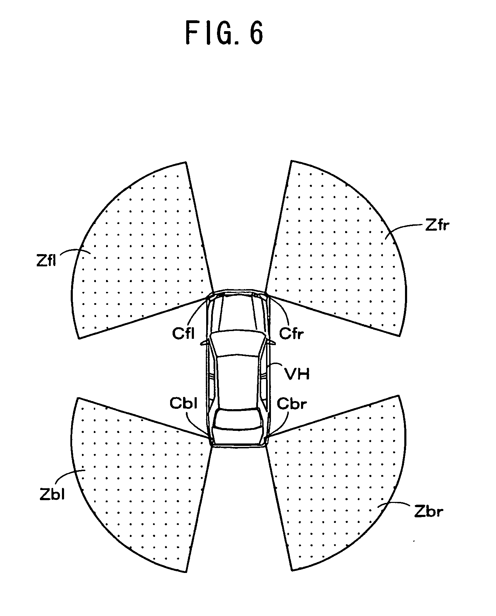

As for the plurality of image capturing means, there may be provided cameras (Cfl), (CFr), (Cbl) and (Cbr), which are disposed at four corners of the vehicle (VH) as shown in FIG.6, whereby four image capturing regions (Zfl), (Zfr), (Zbl), (Zbr) are formed. The number of cameras served as the image capturing means is enough to be at least two. In any case, one of the cameras is selected as the specific image capturing means (C1), on the basis of the positional relationship between the vehicle (VH) and the obstacles, at the outset, and the camera next to it is selected as the second image capturing means (C2), and thereafter, some cameras are selected as the specific image capturing means (C1) and second image capturing means (C2), successively, on the basis of the positional relationship between the vehicle (VH) and the obstacles.

## Claims

1. A movable body circumstance monitoring apparatus having a plurality of image capturing means (C1, C2, Cf, Cb, Cr, Cl) mounted on different positions of a movable body (VH) for capturing an image of environment of said movable body to output an image information, and display means (VD) for selecting one of the image information output from said plurality of image capturing means to be displayed, the movable body circumstance monitoring apparatus comprising:
environmental information detection means (SR) for detecting and storing environmental information around said movable body on the basis of the image information output from a single image capturing means (C1) set to be a specific image capturing means (C1) out of said plurality of image capturing means (C 1, C2, Cf, Cb, Cr, Cl);
movable body information detection means (MB) for successively detecting and storing a position and posture of said movable body;
information combining means (CB) for combining the information detected by said movable body information detection means and the information detected by said environmental information detection means, and correcting a relationship of the position and posture of said movable body relative to said environment to output the information;
obstacle detection means (OD) for detecting an obstacle (OB) to bar against movement of said movable body on the basis of the information output from said information combining means; and
display control means (VC) for controlling said display means (VD) to display the image information of one of said plurality of image capturing means (C1, C2, Cf, Cb, Cr, Cl), whereby said display control means (VC) determines a positional relationship between the image capturing region (Zf, Zb) of said specific image capturing means (C1) or the image capturing region of second image capturing means (C2) other than said specific image capturing means (C1) out of said plurality of image capturing means and said obstacle (OB), on the basis of the information detected by said obstacle detection means (OD) and the information output from said information combining means (CB), and automatically selects one of the image information output from said second image capturing means (C2) and the image information output from said specific image capturing means (C1), including said obstacle (OB) which may bar to a movement of said movable body (VH), on the basis of said positional relationship, and controls said display means (VD) to display the selected image information.

2. A movable body circumstance monitoring apparatus as described in claim 1, wherein, when said obstacle (OB) is included in both of the image information output from said specific image capturing means (C1) and the image information output from said second image capturing means (C2), said display control means (VC) selects the image information output from one of said second image capturing means (C2) and said specific image capturing means (C1), which outputs the image information captured at a position where said obstacle is away from the boundary of the image capturing region (Zf, Zb, Zl, Zr).

3. A movable body circumstance monitoring apparatus as described in claim 1, wherein, when a plurality of obstacles exist, and different obstacles thereof are included in both of the image information output from said specific image capturing means (C1) and the image information output from said second image capturing means (C2), said display control means (VC) selects the image information output from one, of said second image capturing means (C2) and said specific image capturing means (C1), which outputs the image information including the obstacle with highest possibility of approaching to said movable body.

4. A movable body circumstance monitoring apparatus as described in claim 3, wherein said obstacle detection means (OD) comprises track estimation means (TR) for estimating an expected moving track of said movable body (VH) on the basis of the information output from said information combining means (CB), and point-blank moving distance measuring means (MC) for combining the expected moving track estimated by said track estimation means (TR) with the environmental information detected by said environmental information detection means (SR), to identify said obstacle present on the expected moving track of said movable body, and measuring a minimal distance between said movable body (VH) and said obstacle (OB) on the expected moving track, and wherein said display control means (VC) selects the image information output from one of said second image capturing means (C2) and said specific image capturing means (C1), which outputs the image information including the obstacle with highest possibility of approaching to said movable body (VH), on the basis of the result measured by said point-blank moving distance measuring means (MC).

5. A movable body circumstance monitoring apparatus as described in claim 1, wherein said plurality of image capturing means (C1, C2, Cr, Cl, Cf, Cb) include image capturing means disposed in a moving direction of said movable body (VH) and a reverse direction thereof, respectively, and wherein said display control means (VC) selects the image capturing means disposed in the moving direction of said movable body (VH), to be served as said specific image capturing means (C1).

6. A movable body circumstance monitoring apparatus as described in claim 5, wherein said specific image capturing means (C1) comprises the image capturing means (Cf, Cb) disposed in a longitudinal direction of said movable body (VH), and wherein said second image capturing means (C2) comprises the image capturing means (Cr, Cb) disposed in a lateral direction of said movable body (VH).

7. A movable body circumstance monitoring apparatus as described in any one of the preceding claims, wherein said plurality of image capturing means (C1, C2, Cr, Cb, Cf, Cl) comprise image capturing means disposed at four corners of said movable body.

8. A movable body circumstance monitoring apparatus as described in any one of the preceding claims, wherein, when said movable body (VH) is moved from a first state to a second state, at least two images are captured by said specific image capturing means (C1) in said first state and said second state, and wherein said environmental information detection means (SR) includes feature point tracking means (PF) for detecting a coordinate of a feature point on the image captured in said first state, and detecting a coordinate corresponding to said feature point on the image captured in said second state, on the basis of said two images.

9. A movable body circumstance monitoring apparatus as described in claim 8, wherein said environmental information detection means(SR) includes three-dimensional coordinate estimation means (RC) for estimating a three-dimensional coordinate of said feature point on the basis of the position and posture of said vehicle in said first state and said second state, the coordinate of the feature point on the image captured in said first state, and the coordinate corresponding to said feature point on the image captured in said second state.

10. A movable body circumstance monitoring apparatus as described in any one of the preceding claims, wherein, when there exists an obstacle moving relatively according to movement of said movable body, the image in an image capturing region by said specific image capturing means (C1) is automatically changed into the image in an image capturing region by said second image capturing means (C2).

## Patentansprüche

1. Lageüberwachungsvorrichtung für einen beweglichen Körper mit einer Mehrzahl an Bilderfassungsmitteln (C1, C2, Cf, Cb, Cr, Cl), die zum Ausgeben von Bilddatensätzen an verschiedenen Stellen eines beweglichen Körpers (VH) angebracht sind, zum Erfassen eines Bildes der Umgebung des beweglichen Körpers, und einem Anzeigemittel (VD) zum Auswählen von einem der Bilddatensätze, die von der Mehrzahl an Bilderfassungsmitteln ausgegeben werden, zur Anzeige, wobei die Lageüberwachungsvorrichtung für einen beweglichen Körper enthält: ein Umgebungsdatenerfassungsmittel (SR) zum Erfassen und Speichern von Umgebungsdaten rings um den beweglichen Körper auf der Basis der Bilddatenausgabe eines einzelnen Bilderfassungsmittels (C1), das aus der Mehrzahl an Bilderfassungsmitteln (C1, C2, Cf, Cb, Cr, Cl) dazu bestimmt wird, ein spezifisches Bilderfassungsmittel (C1) zu sein;
ein Datenerfassungsmittel (MB) für den beweglichen Körper, zum sukzessiven Erfassen und Speichern einer Lage und Position des beweglichen Körpers;
ein Datenverknüpfungsmittel (CB) zum Verknüpfen der Daten, die durch das Datenerfassungsmittel für den beweglichen Körper erfasst wurden, und der Daten, die durch das Umgebungsdatenerfassungsmittel erfasst wurden, und zum Korrigieren einer Beziehung der Lage und Position des beweglichen Körpers relativ zur Umgebung zum Ausgeben der Daten;
ein Hinderniserfassungsmittel (OD) zum Erfassen eines Hindernisses (OB), das eine Bewegung des beweglichen Körpers hindert, auf der Basis der Daten, die vom Datenverknüpfungsmittel ausgegeben wurden; und
ein Anzeigesteuermittel (VC) zum Steuern des Anzeigemittels (VD) zum Anzeigen der Bilddaten von einem aus der Mehrzahl an Bilderfassungsmitteln (C1, C2, Cf, Cb, Cr, Cl), wodurch das Anzeigesteuermittel (VC) auf der Basis der Daten, die durch das Hinderniserfassungsmittel (OD) erfasst wurden, und der Daten, die vom Datenverknüpfungsmittel (CB) ausgegeben wurden, eine Lagebeziehung zwischen dem Bilderfassungsbereich (Zf, Zb) des spezifischen Bilderfassungsmittels (C1) oder dem Bilderfassungsbereich des zweiten Bilderfassungsmittels (C2), das nicht das spezifische Bilderfassungsmittel (C1) aus der Mehrzahl von Bilderfassungsmitteln ist, und dem Hindernis (OB) bestimmt, und auf der Basis der Lagebeziehung automatisch einen aus dem Bilddatensatz, der vom zweiten Bilderfassungsmittel (C2) ausgegeben ist, und dem Bilddatensatz, der vom spezifischen Bilderfassungsmittel (C1) ausgegeben ist auswählt, der das Hindernis (OB) enthält, das eine Bewegung des beweglichen Körpers (VH) hindern kann, und das Anzeigemittel (VD) steuert, dass es den ausgewählten Bilddatensatz anzeigt.

2. Lageüberwachungsvorrichtung für einen beweglichen Körper nach Anspruch 1, wobei, wenn das Hindernis (OB) sowohl in den Bilddaten, die vom spezifischen Bilderfassungsmittel (C1) ausgegeben werden, als auch in den Bilddaten, die vom zweiten Bilderfassungsmittel (C2) ausgegeben werden, enthalten ist, das Anzeigensteuermittel (VC) von den Bilddaten, die vom zweiten Bilderfassungsmittel (C2) und vom spezifischen Bilderfassungsmittel (C1) ausgegeben werden, den Bilddatensatz auswählt, der die Bilddaten ausgibt, die in einer Lage erfasst wurden, in der sich das Hindernis entfernt von der Grenze des Bilderfassungsbereichs (Zf, Zb, Zl, Zr) befindet.

3. Lageüberwachungsvorrichtung für einen beweglichen Körper nach Anspruch 1, wobei, wenn eine Mehrzahl an Hindernissen vorhanden ist, und verschiedene Hindernisse davon sowohl in den Bilddaten, die vom spezifischen Bilderfassungsmittel (C1) ausgegeben werden, als auch in den Bilddaten, die vom zweiten Bilderfassungsmittel (C2) ausgegeben werden, enthalten sind, das Anzeigesteuermittel (VC) aus den Bilddaten, die vom zweiten Bilderfassungsmittel (C2) und vom spezifischen Bilderfassungsmittel (C1) ausgegeben werden, den Bilddatensatz auswählt, der die Bilddaten ausgibt, die das Hindernis enthalten, das dem beweglichen Körper am wahrscheinlichsten näherkommt.

4. Lageüberwachungsvorrichtung für einen beweglichen Körper nach Anspruch 3, wobei das Hinderniserfassungsmittel (OD) ein Streckenabschätzmittel (TR) zum Abschätzen einer erwarteten Bewegungsstrecke des beweglichen Körpers (HV) auf der Basis der Daten, die vom Datenverknüpfungsmittel (CB) ausgegeben wurden, enthält, und ein Messmittel (MC) für die kürzeste Bewegungsstrecke, zum Verknüpfen der erwarteten Bewegungsstrecke, die durch das Streckenabschätzmittel (TR) geschätzt wurde, mit den Umgebungsdaten, die durch das Umgebungsdatenerfassungsmittel (SR) erfasst wurden, zum Identifizieren des Hindernisses, das sich auf der erwarteten Bewegungsstrecke des beweglichen Körpers befindet, und zum Messen eines minimalen Abstands zwischen dem beweglichen Körper (VH) und dem Hindernis (OB) auf der erwarteten Bewegungsstrecke, und wobei das Anzeigensteuermittel (VC) auf der Basis des Ergebnisses, das vom Messmittel (MC) für die kürzeste Bewegungsstrecke gemessen wurde, aus den Bilddaten, die vom zweiten Bilderfassungsmittel (C2) und vom spezifischen Bilderfassungsmittel (C1) ausgegeben werden, den Bilddatensatz auswählt, der das Hindernis enthält, das dem beweglichen Körper (VH) am wahrscheinlichsten näherkommt.

5. Lageüberwachungsvorrichtung für einen beweglichen Körper nach Anspruch 1, wobei die Mehrzahl an Bilderfassungsmitteln (C1, C2, Cr, Cl, Cf, Cb) ein Bilderfassungsmittel enthält, das in einer Bewegungsrichtung des beweglichen Körpers (VH) bzw. in einer Rückwärtsrichtung davon angebracht ist, und wobei das Anzeigensteuermittel (VC) das Bilderfassungsmittel, das sich in der Bewegungsrichtung des beweglichen Körpers (VH) befindet, dazu auswählt, als das spezifische Bilderfassungsmittel (C1) zu dienen.

6. Lageüberwachungsvorrichtung für einen beweglichen Körper nach Anspruch 5, wobei das spezifische Bilderfassungsmittel (C1) die Bilderfassungsmittel (Cf, Cb) enthält, die in einer Längsrichtung des beweglichen Körpers (VH) angeordnet sind, und wobei das zweite Bilderfassungsmittel (C2) die Bilderfassungsmittel (Cr, Cb) enthält, die in einer lateralen Richtung des beweglichen Körpers (VH) angeordnet sind.

7. Lageüberwachungsvorrichtung für einen beweglichen Körper nach einem der vorangegangenen Ansprüche, wobei die Mehrzahl an Bilderfassungsmitteln (C1, C2, Cr, Cb, Cf, Cl) Bilderfassungsmittel enthält, die das an vier Ecken des beweglichen Körpers angeordnet sind.

8. Lageüberwachungsvorrichtung für einen beweglichen Körper nach einem der vorangegangenen Ansprüche, wobei, wenn der bewegliche Körper (VH) von einem ersten Zustand in einen zweiten Zustand bewegt wird, zumindest zwei Bilder durch das spezifische Bilderfassungsmittel (C1) im ersten Zustand und im zweiten Zustand erfasst werden, und wobei das Umgebungsdatenerfassungsmittel (SR) ein Merkmalspunktzuordnungsmittel (PF) enthält, zum Erfassen einer Koordinate eines Merkmalspunkts auf dem Bild, das im ersten Zustand erfasst wurde, und zum Erfassen einer Koordinate, die dem Merkmalspunkt auf dem Bild entspricht, das im zweiten Zustand erfasst wurde, auf der Basis der beiden Bilder.

9. Lageüberwachungsvorrichtung für einen beweglichen Körper nach Anspruch 8, wobei das Umgebungsdatenerfassungsmittel (SR) Abschätzmittel (RC) für dreidimensionale Koordinaten, zum Abschätzen einer dreidimensionalen Koordinate des Merkmalspunkts auf der Basis der Lage und Position des Fahrzeugs im ersten Zustand und im zweiten Zustand, der Koordinate des Merkmalspunkts auf dem Bild, das im ersten Zustand erfasst wurde, und der Koordinate, die dem Merkmalspunkt auf dem Bild entspricht, das im zweiten Zustand erfasst wurde, enthält.

10. Lageüberwachungsvorrichtung für einen beweglichen Körper nach einem der vorangegangenen Ansprüche, wobei, wenn ein Hindernis existiert, das sich relativ entsprechend der Bewegung des beweglichen Körpers bewegt, das Bild in einem Bilderfassungsbereich des spezifischen Bilderfassungsmittels (C1) automatisch in das Bild in einem Bilderfassungsbereich des zweiten Bilderfassungsmittels (C2) geändert wird.

## Revendications

1. Appareil de surveillance de la situation d'un corps mobile ayant une pluralité de moyens de capture d'images (C1, C2, Cf, Cb, Cr, Cl) montés à différentes positions d'un corps mobile (VH) pour prendre une image de l'environnement dudit corps mobile pour délivrer en sortie des informations d'image, et un moyen d'affichage (VD) pour sélectionner l'une des informations d'image sorties depuis ladite pluralité de moyens de capture d'image à afficher, l'appareil de surveillance de la situation d'un corps mobile comprenant:
un moyen de détection d'informations environnementales (SR) pour détecter et stocker des informations environnementales autour dudit corps mobile sur la base des informations d'image sorties depuis un seul moyen de capture d'image (C1) établi de manière à être un moyen de capture d'image spécifique (C1) parmi ladite pluralité de moyens de capture d'image (C1, C2, Cf, Cb, Cr, Cl);
un moyen (MB) de détection d'informations concernant le corps mobile pour détecter et stocker de manière successive une position et une posture dudit corps mobile;
un moyen de combinaison d'informations (CB) pour combiner les informations détectées par ledit moyen de détection d'informations concernant le corps mobile et les informations détectées par ledit moyen de détection d'informations environnementales, et corriger une relation de la position et de la posture dudit corps mobile par rapport audit environnement pour délivrer en sortie les informations;
un moyen de détection d'obstacle (OD) pour détecter un obstacle (OB) entravant le mouvement dudit corps mobile sur la base des informations délivrées en sortie depuis ledit moyen de combinaison d'informations; et
un moyen de commande d'affichage (VC) pour commander ledit moyen d'affichage (VD) afin d'afficher les informations d'images de l'un de ladite pluralité de moyens de capture d'images (C1, C2, Cf, Cb, Cr, Cl), de sorte que ledit moyen de commande d'affichage (VC) détermine une relation de position entre la région de capture d'image (Zf, Zb) dudit moyen de capture d'image spécifique (C1) ou de la région de capture d'image du deuxième moyen de capture d'image (C2) autre que ledit moyen de capture d'image spécifique (C1) parmi ladite pluralité de moyens de capture d'images et dudit obstacle (OB), sur la base des informations détectées par ledit moyen de détection d'obstacle (OD) et des informations sorties depuis ledit moyen de combinaison d'informations (CB), et sélectionne automatiquement l'une des informations d'image sorties dudit deuxième moyen de capture d'image (C2) et des informations d'image sorties dudit moyen de capture d'image spécifique (C1), incluant ledit obstacle (OB) qui peut entraver un mouvement dudit corps mobile (VH), sur la base de ladite relation de position, et commande ledit moyen d'affichage (VD) afin d'afficher les informations d'image sélectionnées.

2. Appareil de surveillance de la situation d'un corps mobile selon la revendication 1, dans lequel, lorsque ledit obstacle (OB) est compris à la fois dans les informations d'image sorties depuis ledit moyen de capture d'image spécifique (C1) et les informations d'image sorties depuis ledit deuxième moyen de capture d'image (C2), ledit moyen de commande d'affichage (VC) sélectionne les informations d'image sorties depuis l'un dudit deuxième moyen de capture d'image (C2) et dudit moyen de capture d'image spécifique (C1), qui délivre en sortie les informations d'image prise à une position où ledit obstacle est loin de la limite de la région de capture d'image (Zf, Zb, ZI, Zr).

3. Appareil de surveillance de la situation d'un corps mobile selon la revendication 1, dans lequel, lorsqu'il y a plusieurs obstacles, et que différents obstacles correspondants sont compris à la fois dans les informations d'image sorties depuis ledit moyen de capture d'image spécifique (C1) et les informations d'image sorties depuis ledit deuxième moyen de capture d'image (C2), ledit moyen de commande d'affichage (VC) sélectionne les informations d'image sorties depuis l'un dudit deuxième moyen de capture d'image (C2) et dudit moyen de capture d'image spécifique (C1), qui fait sortir les informations d'image incluant l'obstacle avec la possibilité la plus forte de s'approcher dudit corps mobile.

4. Appareil de surveillance de la situation d'un corps mobile selon la revendication 3, dans lequel ledit moyen de détection d'obstacles (OD) comprend un moyen d'estimation de voie (TR) pour estimer une voie de déplacement prévue dudit corps mobile (VH) sur la base des informations sorties depuis ledit moyen de combinaison d'informations (CB), et un moyen de mesure de distance de déplacement au point de référence zéro(MC) pour combiner la voie de déplacement prévue estimée par ledit moyen d'estimation de voie (TR) avec les informations environnementales détectées par ledit moyen de détection d'informations environnementales (SR), pour identifier ledit obstacle présent sur la voie de déplacement prévue dudit corps mobile, et mesurer une distance minimale entre ledit corps mobile (VH) et ledit obstacle (OB) sur la voie de déplacement prévue, et où ledit moyen de commande d'affichage (VC) sélectionne les informations d'image sorties depuis l'un dudit deuxième moyen de capture d'image (C2) et dudit moyen de capture d'image spécifique (C1), qui fait sortir les informations d'image incluant l'obstacle avec la possibilité la plus forte de s'approcher dudit corps mobile (VH), sur la base du résultat mesuré par ledit moyen de mesure de distance de déplacement au point de référence zéro (MC).

5. Appareil de surveillance de la situation d'un corps mobile selon la revendication 1, dans lequel ladite pluralité de moyens de capture d'images (C1, C2, Cr, Cl, Cf, Cb) comprennent un moyen de capture d'image disposé dans une direction de déplacement dudit corps mobile (VH) et une direction inverse de celle-ci, respectivement, et dans lequel ledit moyen de commande d'affichage (VC) sélectionne le moyen de capture d'image disposé dans la direction de déplacement dudit corps mobile (VH), pour servir comme étant ledit moyen de capture d'image spécifique (C1).

6. Appareil de surveillance de la situation d'un corps mobile selon la revendication 5, dans lequel ledit moyen de capture d'image spécifique (C1) comprend le moyen de capture d'image (Cf, Cb) disposé dans une direction longitudinale dudit corps mobile (VH), et dans lequel ledit deuxième moyen de capture d'image (C2) comprend le moyen de capture d'image (Cr, Cb) disposé dans une direction latérale dudit corps mobile (VH).

7. Appareil de surveillance de la situation d'un corps mobile selon l'une quelconque des revendications précédentes, dans lequel ladite pluralité de moyens de capture d'images (C1, C2, Cr, Cb, Cf, Cl) comportent un moyen de capture d'images disposé aux quatre coins dudit corps mobile.

8. Appareil de surveillance de la situation d'un corps mobile selon l'une quelconque des revendications précédentes, dans lequel, lorsque ledit corps mobile (VH) passe d'un premier état à un deuxième état, au moins deux images sont prises par ledit moyen de capture d'image spécifique (C1) dans ledit premier état et dans ledit deuxième état, et dans lequel ledit moyen de détection d'informations environnementales (SR) comprend un moyen de poursuite de point caractéristique (PF) pour détecter une coordonnée d'un point caractéristique sur l'image prise dans ledit premier état, et détecter une coordonnée correspondant audit point caractéristique de l'image prise dans ledit deuxième état, sur la base desdites deux images.

9. Appareil de surveillance de la situation d'un corps mobile selon la revendication 8, dans lequel ledit moyen de détection d'informations environnementales (SR) comprend un moyen d'estimation de coordonnée tridimensionnelle (RC) pour estimer une coordonnée tridimensionnelle dudit point caractéristique sur la base de la position et de la posture dudit véhicule dans ledit premier état et dans ledit deuxième état, la coordonnée du point caractéristique de l'image prise dans ledit premier état, et la coordonnée correspondant audit point caractéristique de l'image prise dans ledit deuxième état.

10. Appareil de surveillance de la situation d'un corps mobile selon l'une quelconque des revendications précédentes, dans lequel, lorsqu'il y a un obstacle en déplacement relatif selon un mouvement dudit corps mobile, l'image dans une région de capture d'image par ledit moyen de capture d'image spécifique (C1) est automatiquement changée en l'image dans une région de capture d'image par ledit deuxième moyen de capture d'image (C2).
